# EUROPEAN PATENT SPECIFICATION

(11) **EP 3 158 515 B1**
(45) Date of publication and mention of the grant of the patent: **11.09.2019**
(21) Application number: 15741334.5
(22) Date of filing: 19.06.2015
(51) Int. Cl.: G06Q 10/08

(54) **VEHICULAR SYSTEM FOR ASSISTING THE DELIVERY OF GOODS**
FAHRZEUGSYSTEM ZUR UNTERSTÜTZUNG DER LIEFERUNG VON GÜTERN
SYSTÈME DE VÉHICULE DESTINÉ À AIDER LA DISTRIBUTION DE MARCHANDISES

(30) Priority: 19.06.2014 IT MI20141112
(43) Date of publication of application: 26.04.2017
(73) Proprietor: Iveco S.p.A., 10156 Torino (IT)
(72) Inventor: NICOSIA, Biagio, I-10141 Torino (IT); VARRASSO, Maddalena, I-10156 Torino (IT)
(74) Representative: Fiume, Orazio
(86) International application number: PCT/IB2015/054634
(87) International publication number: WO 2015/193855

(56) References cited:
- DE-A1-102007 021 744
- US-A1- 2012 253 507
- RUPERT REIF ET AL: "Pick-by-vision: augmented reality supported order picking", THE VISUAL COMPUTER ; INTERNATIONAL JOURNAL OF COMPUTER GRAPHICS, SPRINGER, BERLIN, DE, vol. 25, no. 5-7, 3 March 2009 (2009-03-03), pages 461-467, XP019711725, ISSN: 1432-2315

## Description

### Field of application of the invention

The present invention relates to the field of vehicular systems for assisting the delivery of goods. An example of vehicle including a similar system is given in DE102007021744, whose features are in the preamble of the appended claim 1.

### Background art

Vehicles intended to deliver goods are often filled with parcels, without being able to sort them systematically due to a lack of available space.

Therefore, once the destination is reached, the operator is forced to look in the loading compartment of the vehicle for the parcel to be delivered, thus wasting precious time.

It is believed that the procedures for introducing and finding parcels accommodated in goods delivery vehicles may be improved.

### Summary of the invention

Therefore, it is the object of the present invention to indicate a vehicular system for assisting the delivery of goods which allows a more immediate identification of the parcels to be delivered, so as to allow a significant time saving.

The basic idea of the present invention is to cause an RFID portal to cooperate with one or more cameras installed within the vehicle loading compartment, so
that when a parcel provided with an RFID tag crosses an opening providing access to the vehicle loading compartment, an image of the parcel is taken, while associating parcel, corresponding destination and image.

When the vehicle reaches the delivery place of such a parcel, the system automatically displays the image of the parcel previously taken, so that the operator can identify the parcel more easily.

According to the invention, the on-board optical system comprising the aforesaid one or more cameras is capable of imaging the shape of a parcel which is introduced in the loading compartment of the vehicle, and following it until it is put down. Therefore, the system associates the parcel with its corresponding position within the loading compartment.

When the vehicle reaches the delivery place of such a parcel, not only does the system automatically display the image of the parcel, but also an internal view of the loading compartment and the position of the parcel being delivered, by means of graphical elements, such as an arrow or a circle overlapping the internal view.

It is apparent from the above description that the system according to the present invention comprises at least one display on which the aforesaid images are

The claims describe preferred variants of the present invention, thus forming an integral part of the present description.

### Brief description of the drawings

Further objects and advantages of the present invention will become apparent from the following detailed description of an embodiment (and two variants) thereof and from the accompanying drawings given by way of mere non-limiting example, in which:
figure 1 diagrammatically shows the interaction between the components defining the system according to the present invention;
figures 2 and 3 show a perspective view of an inner part of a vehicle loading compartment, during an introduction of a parcel therein;
figure 4 shows a photograph of the loading compartment displayed on an on-board display.

The same reference numbers and letters in the figures identify the same elements or components.

### Detailed description of the embodiments

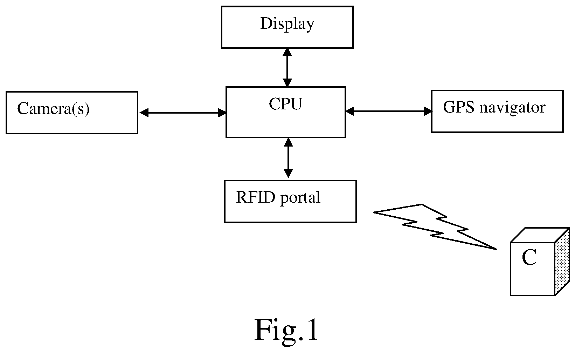

According to the present invention, with reference to figure 1, the vehicular system for assisting the delivery of goods comprises an RFID portal, that is a device capable of communicating with RFID tags and especially of reading the ID and further information contained in an RFID associated with a parcel C, preferably while the parcel crosses an opening of the vehicle, generally a door which provides access to the vehicle loading compartment.

The system comprises one or more photo or video cameras, stably installed within the loading compartment.

When parcel C enters the loading compartment of the vehicle, one or more images are taken of the opening providing access to the loading compartment.

A suitable software, known per se, extracts the image of the parcel from the image(s) taken and saves it in association with the ID of the parcel in a GPS position of a corresponding predetermined delivery place of the parcel. Such a software preferably runs on a vehicular processing unit.

Generally, a list containing IDs and corresponding delivery addresses is previously shared between the on-board system and a remote server intended for the purpose.

The vehicle is also provided with a GPS-guide-assisted cartographic navigation system (GPS navigator), adapted to drive the vehicle to the different delivery addresses of the parcels loaded/to be loaded in the aforesaid loading compartment.

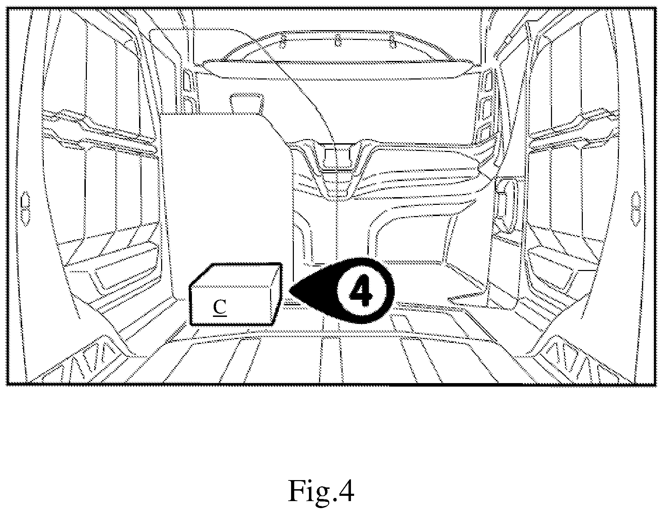

The aforesaid processing unit is interfaced with the navigation system and with the RFID portal,
therefore when the navigation system detects that the vehicle has reached a delivery place of a parcel C, the processing unit uses a suitable display on board the vehicle to display one or more of the images of the corresponding parcel to be delivered, which were previously saved and associated with the corresponding ID, as shown in figure 4.

Advantageously, the system assists the operator to identify, in the loading compartment, the parcel to be delivered.

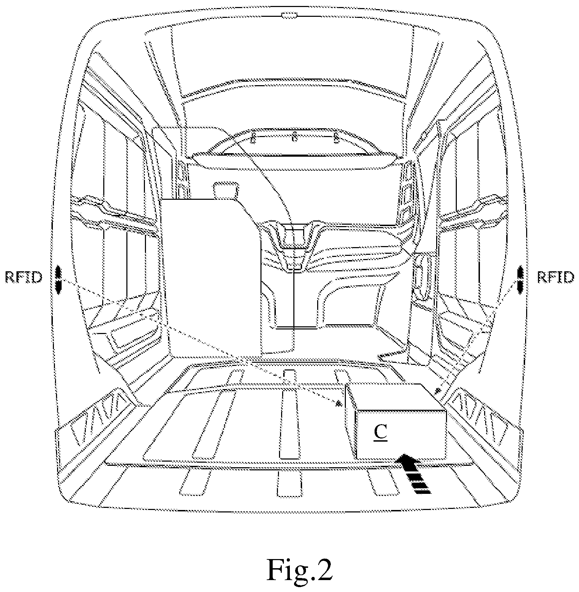

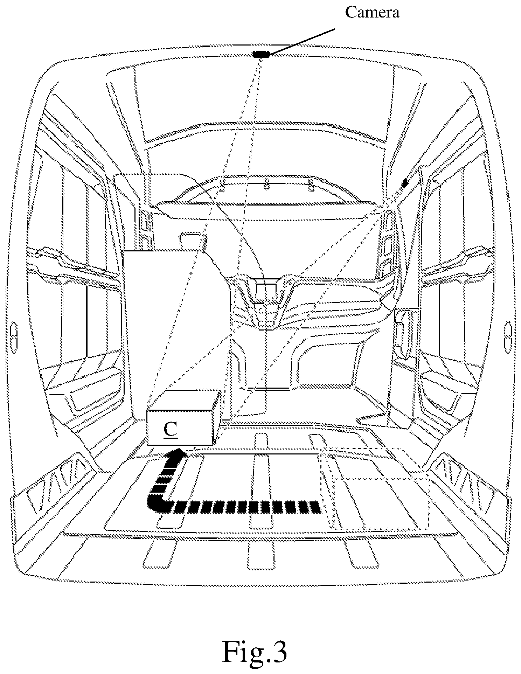

According to the invention, the loading compartment of the vehicle comprises several cameras capable of filming the same compartment from several angles, and the software cooperating with the cameras and capable of extracting the portions of images relating to the parcel up to a corresponding final position (see the sequence of figures 2 and 3), that is as long as parcel C is visible and still (figure 3) or until it disappears because it has been introduced in a storage container, such as drawers and collectors. Then the software extracts the final position of the parcel with respect to the loading compartment of the vehicle and saves it together with the corresponding image(s), which were previously associated with the corresponding ID.

When the navigation system detects that the vehicle has reached the place for delivering such a parcel, the system is capable of displaying, by means of the aforesaid display (see figure 4), both the images relating to the parcel and the position of the parcel within the loading compartment (see figure 2).

At least one perspective view of the interior of the loading compartment is preferably displayed, with an overprinted graphical element, such as an arrow or any symbol, which indicates the final position of the corresponding parcel C within the loading compartment.

The parcel is preferably shown in the position indicated by means of the same images previously acquired of the parcel.

The input, rather than the output, of a parcel into/from the loading compartment of the vehicle can be immediately detected according to the presence or absence of the corresponding ID on a list of IDs saved by the processing unit. Therefore, if an ID is already present, a flag positioned to ON indicates that the parcel is exiting from the vehicle and therefore the corresponding flag is changed to OFF. If instead a corresponding flag is positioned to OFF, it means that the parcel is entering the vehicle and therefore the corresponding record which associates the corresponding ID with the images of the parcel and possibly with the corresponding position within the loading compartment, is updated as described above.

Although not shown in figure 1, the processing unit also comprises wireless communication means, for example 3G, which allow it to communicate with a remote server to receive the list of the IDs of the parcels to be loaded in the hub of the fleet, before the delivery mission starts.

Such an RFID portal-reader is preferably interfaced with said processing unit, which is preferably defined by a tablet, so the latter can
- verify that all and only the parcels intended to be delivered in the current mission are actually loaded on board,
- verify that the corresponding parcels are actually unloaded in a predetermined delivery place,
- acquire the acceptance of a new parcel and transmit the ID and further corresponding information to the remote server.

The present invention may be advantageously achieved by means of a computer program which comprises code means to perform one or more steps of the method, when this program is run on a computer. Hence, it is intended that the scope of protection is extended to said computer program and moreover, to computer-readable means comprising a recorded message, said computer-readable means comprising program code means to carry out one or more steps of the method, when said program is run on a computer.

Variations to the non-limiting example described are possible, without however departing from the scope of protection of the present invention, comprising all the equivalent embodiments for a person skilled in the art.

A person skilled in the art can achieve the object of the invention from the aforesaid description without introducing further construction details. The elements and features disclosed in the various preferred embodiments may be combined with one another without however departing from the scope of protection of the present application. Unless specifically excluded in the detailed description, the details described in the description of the background art are to be considered in combination with the features of the present invention, thus forming an integral part of the present invention.

## Claims

1. Vehicular system for assisting the delivery of goods, said goods being defined by a plurality of parcels (C) to be delivered, each one of them being equipped with an RFID tag, the system comprising
- a cartographic satellite navigation system (GPS navigator) adapted to drive said vehicle along a route comprising a plurality of stops corresponding to the delivery places of one or more of said parcels (C),
- an RFID portal associated to a vehicle loading opening,
- optical acquisition means (cameras),
- means for displaying images (display),
- processing means (CPU) interoperating with said satellite navigation system, with said RFID portal, with said optical acquisition means and with said means for displaying images, wherein said processing means are configured to acquire at least one image of a parcel introduced in said vehicle through said RFID portal and to display said at least one image by means of said display means when the cartographic satellite navigation system detects the reaching of a delivery place corresponding to said parcel, the system being **characterized in that** said processing means (CPU) are configured to acquire a sequence of images from said optical acquisition means (cameras) and to extract portions of images relating to the parcel up to a respective final position in a loading compartment and to extract said final position of the parcel (C) with respect to the vehicle loading compartment and to store said position together with said at least one image of the parcel (C).

2. System according to claim 1, wherein said processing means (CPU) are configured to display said final position of the parcel (C) within the loading compartment by means of said display means when the cartographic satellite navigation system detects the reaching of a delivery place corresponding to said parcel.

3. System according to claim 2, wherein said final position is displayed by means of at least one perspective view of the inside of the loading compartment with at least one overprinted graphical element indicating said final position.

4. Method for assisting the delivery of goods by means of a vehicle, said goods being defined by a plurality of parcels (C) to be delivered, each one of them being equipped with an RFID tag, the method comprising the following steps
- detection of an introduction of a parcel (C) in a vehicle compartment by means of an RFID portal associated to a vehicle loading opening,
- acquisition of at least one image of a parcel, by means of optical acquisition means, following to a respective introduction in said vehicle by means of said RFID portal,
- storing of said at least one image,
- acquisition of a GPS position of said vehicle by means of cartographic and GPS navigation means and
when the reaching of a delivery place corresponding to said parcel (C) is detected,
- display of said at least one image by means of display means,
the method further comprising the step of acquiring a sequence of images and of extracting portions of images relating to the parcel up to a respective final position in the loading compartment and the step of extracting said final position of the parcel (C) with respect to the vehicle loading compartment and of storing said position together with said at least one image of the parcel (C).

5. Method according to claim 4, further comprising a step of showing said final position of the parcel (C) within the loading compartment when the reaching of said delivery place corresponding to said parcel is detected.

6. Method according to claim 5, wherein said final position is displayed by means of at least one perspective view of the inside of the loading compartment with at least one overprinted graphical element indicating said final position.

7. Computer program comprising program code means adapted to perform all the steps of one of the claims from 4 to 6, when said program is run on a computer.

8. Computer-readable means comprising a recorded program, said computer-readable means comprising program code means adapted to perform all the steps of any one of the claims from 4 to 6, when said program is run on a computer.

## Patentansprüche

1. Fahrzeugsystem zur Unterstützung der Auslieferung von Waren, welche Waren durch eine Mehrzahl von Paketen (C) definiert sind, die auszuliefern sind, wobei jedes von ihnen mit einer RFID-Markierung ausgestattet ist, welches System umfasst:
- ein kartographisches Satelliten-Navigationssystem (GPS-Navigator), ausgebildet zum Fahren des Fahrzeugs entlang eines Wegs, der eine Mehrzahl von Haltepunkten umfasst, entsprechend den Auslieferungsorten von einem oder mehreren der Pakete (C),
- ein RFID-Portal, welches einer Fahrzeugladungs-Öffnung zugeordnet ist,
- optische Erfassungsmittel (Kameras),
- Mittel zur Anzeige von Bildern (Display),
- Verarbeitungsmittel (CPU), welche mit dem Satelliten-Navigationssystem, mit dem RFID-Portal, den optischen Erfassungsmitteln und den Mitteln zur Bildanzeige interagieren, wobei die Verarbeitungsmittel dazu ausgebildet sind, zumindest ein Bild eines Pakets zu erfassen, welches in das Fahrzeug durch das RFID-Portal eingeführt wird, und das zumindest eine Bild mittels der Bildanzeige-Mittel darzustellen, wenn das kartographische Satelliten-Navigationssystem das Erreichen eines Auslieferungsorts detektiert, welcher dem Paket entspricht, welches System **dadurch gekennzeichnet ist, dass** die Verarbeitungsmittel (CPU) dazu ausgebildet sind, eine Abfolge von Bildern von dem optischen Erfassungssystem (Kameras) zu erfassen und Teile der Bilder zu extrahieren, welche sich auf das Paket beziehen, bis zu einer entsprechenden Endposition in einem Laderaum, und die Endposition des Pakets (C) bezüglich des Fahrzeugladeraums zu extrahieren und die Position zusammen mit dem zumindest einen Bild des Pakets (C) zu speichern.

2. System gemäß Anspruch 1, bei welchem die Verarbeitungsmittel (CPU) dazu ausgebildet sind, die Position des Pakets (C) innerhalb des Laderaums durch die Anzeigemittel darzustellen, wenn das kartographische Satelliten-Navigationssystem das Erreichen eines Auslieferungsorts entsprechend dem Paket detektiert.

3. System gemäß Anspruch 2, bei welchem die Endposition mittels zumindest einer perspektivischen Ansicht des Innenbereichs des Laderaums mit zumindest einem überlagerten graphischen Element, welches die finale Position bezeichnet, anzeigt.

4. Verfahren zur Unterstützung der Auslieferung von Waren mittels eines Fahrzeugs, welche Waren durch eine Mehrzahl von Paketen (C) definiert sind, die auszuliefern sind, wobei jedes von ihnen mit einem RFID-Etikett ausgestattet ist, welches Verfahren die folgenden Schritte umfasst:
- Detektion der Einführung eines Pakets (C) in einen Fahrzeugladeraum mittels eines RFID-Portals, das einer Fahrzeugladeöffnung zugeordnet ist,
- Erfassung zumindest eines Bilds eines Pakets mittels optischer Erfassungsmittel, folgend auf eine jeweilige Einführung in das Fahrzeug über das RFID-Portal,
- Speicherung des zumindest einen Bilds,
- Erfassung einer GPS-Position des Fahrzeugs mittels kartographischer und GPS-Navigationsmittel, und
- wenn das Erreichen eines Auslieferungsorts entsprechend dem Paket (C) detektiert wird,
- Anzeige des zumindest einen Bilds mittels Anzeigemitteln,
welches Verfahren ferner den Schritt der Erfassung einer Abfolge von Bildern und der Extraktion von Teilen von Bildern bezüglich des Pakets bis zu einer jeweiligen Endposition in dem Laderaum umfasst, und den Schritt der Extraktion der Endposition des Pakets (C) bezüglich des Fahrzeugladeraums, und des Speicherns der Position gemeinsam mit dem zumindest einen Bild des Pakets (C).

5. Verfahren gemäß Anspruch 4, ferner umfassend einen Schritt der Darstellung der Endposition des Pakets (C) innerhalb des Laderaums, wenn das Erreichen des Auslieferungsorts, der dem Paket entspricht, detektiert wird.

6. Verfahren gemäß Anspruch 5, bei welchem die Endposition mittels zumindest einer perspektivischen Anzeige des Innenbereichs des Laderaums mit zumindest einem überlagerten graphischen Element, welches die Endposition bezeichnet, angezeigt wird.

7. Computerprogramm, umfassend Programmcode-Mittel, ausgebildet zur Durchführung aller Schritte gemäß einem der Ansprüche 4 bis 6, wenn das Programm auf einem Computer ausgeführt wird.

8. Computerlesbare Mittel, umfassend ein gespeichertes Programm, welche computerlesbaren Mittel Programmcode-Mittel umfassen, ausgebildet zur Durchführung aller Schritte gemäß einem der Ansprüche 4 bis 6, wenn das Programm auf einem Computer ausgeführt wird.

## Revendications

1. Système de véhicule destiné à contribuer à la distribution de marchandises, lesdites marchandises étant définies par une pluralité de paquets (C) qui doivent être distribués, chacun d'eux étant équipé d'une étiquette RFID, le système comprenant :
- un système de navigation par satellite cartographique (un navigateur GPS) qui est adapté de manière à ce qu'il conduise ledit véhicule le long d'un parcours routier qui comprend une pluralité d'arrêts qui correspondent aux sites de distribution d'un ou de plusieurs desdits paquets (C) ;
- un portique RFID qui est associé à une ouverture de chargement de véhicule ;
- un moyen d'acquisition optique (des caméras) ;
- un moyen pour afficher des images (un affichage) ;
- un moyen de traitement (une CPU) qui interagit avec ledit système de navigation par satellite, avec ledit portique RFID, avec ledit moyen d'acquisition optique et avec ledit moyen pour afficher des images, dans lequel ledit moyen de traitement est configuré de manière à ce qu'il acquière au moins une image d'un paquet qui est introduit à l'intérieur dudit véhicule par passage au travers dudit portique RFID et de manière à ce qu'il affiche ladite au moins une image au moyen dudit moyen d'affichage lorsque le système de navigation par satellite cartographique détecte l'atteinte d'un site de distribution qui correspond audit paquet, le système étant **caractérisé en ce que** ledit moyen de traitement (la CPU) est configuré de manière à ce qu'il acquière une séquence d'images à partir dudit moyen d'acquisition optique (les caméras) et de manière à ce qu'il extraie des sections d'images se rapportant au paquet jusqu'à une position finale respective à l'intérieur d'un compartiment de chargement et de manière à ce qu'il extraie ladite position finale du paquet (C) en relation avec le compartiment de chargement de véhicule et de manière à ce qu'il stocke ladite position en association avec ladite au moins une image du paquet (C).

2. Système selon la revendication 1, dans lequel ledit moyen de traitement (la CPU) est configuré de manière à ce qu'il affiche ladite position finale du paquet (C) à l'intérieur du compartiment de chargement au moyen dudit moyen d'affichage lorsque le système de navigation par satellite cartographique détecte l'atteinte d'un site de distribution qui correspond audit paquet.

3. Système selon la revendication 2, dans lequel ladite position finale est affichée au moyen d'au moins une vue en perspective de l'intérieur du compartiment de chargement avec au moins un élément graphique en surimpression qui indique ladite position finale.

4. Procédé pour contribuer à la distribution de marchandises au moyen d'un véhicule, lesdites marchandises étant définies par une pluralité de paquets (C) qui doivent être distribués, chacun d'entre eux étant équipé d'une étiquette RFID, le procédé comprenant les étapes qui suivent :
- la détection d'une introduction d'un paquet (C) à l'intérieur d'un compartiment de véhicule au moyen d'un portique RFID qui est associé à une ouverture de chargement de véhicule ;
- l'acquisition d'au moins une image d'un paquet, au moyen d'un moyen d'acquisition optique, suite à une introduction respective à l'intérieur dudit véhicule au moyen dudit portique RFID ;
- le stockage de ladite au moins une image ;
- l'acquisition d'une position GPS dudit véhicule au moyen d'un moyen cartographique et de navigation GPS ; et
lorsque l'atteinte d'un site de distribution qui correspond audit paquet (C) est détectée :
- l'affichage de ladite au moins une image au moyen d'un moyen d'affichage ;
le procédé comprenant en outre l'étape d'acquisition d'une séquence d'images et d'extraction de sections d'images se rapportant au paquet jusqu'à une position finale respective à l'intérieur du compartiment de chargement et l'étape d'extraction de ladite position finale du paquet (C) en relation avec le compartiment de chargement de véhicule et de stockage de ladite position en association avec ladite au moins une image du paquet (C).

5. Procédé selon la revendication 4, comprenant en outre une étape de présentation de ladite position finale du paquet (C) à l'intérieur du compartiment de chargement lorsque l'atteinte dudit site de distribution qui correspond audit paquet est détectée.

6. Procédé selon la revendication 5, dans lequel ladite position finale est affichée au moyen d'au moins une vue en perspective de l'intérieur du compartiment de chargement avec au moins un élément graphique en surimpression qui indique ladite position finale.

7. Programme informatique comprenant un moyen de code de programme qui est adapté de manière à ce qu'il réalise toutes les étapes de l'une quelconque des revendications 4 à 6, lorsque ledit programme est exécuté sur un ordinateur.

8. Moyen lisible par ordinateur comprenant un programme enregistré, ledit moyen lisible par ordinateur comprenant un moyen de code de programme qui est adapté de manière à ce qu'il réalise toutes les étapes de l'une quelconque des revendications 4 à 6, lorsque ledit programme est exécuté sur un ordinateur.
